# FASCICULE DE BREVET EUROPEEN

(11) **EP 2 461 996 B1**
(45) Date de publication et mention de la délivrance du brevet: **10.12.2014**
(21) Numéro de dépôt: 10745360.7
(22) Date de dépôt: 28.06.2010
(51) Int. Cl.: B60J 10/04, B60J 10/00

(54) **LECHEUR DE VITRE POUR PORTE DE VEHICULE ET PORTE EQUIPEE D'UN TEL LECHEUR DE VITRE.**
DICHTUNG FÜR KFZ-FENSTERSCHACHT UND KFZ-TÜR AUSGESTATTET MIT SOLCH EINER DICHTUNG
WEATHER STRIP FOR VEHCILE DOOR BELT LINE AND DOOR EQUIPPED WITH SUCH A STRIP

(30) Priorité: 06.08.2009 FR 0955526
(43) Date de publication de la demande: 13.06.2012
(73) Titulaire: Peugeot Citroën Automobiles Société Anonyme, 78140 Vélizy Villacoublay (FR)
(72) Inventeur: BARRON, Gilles, F-25420 Bart (FR)
(74) Mandataire: Fernandez, Francis Lionel
(86) Numéro de dépôt international: PCT/FR2010/051345
(87) Numéro de publication internationale: WO 2011/015740

(56) Documents cités:
- GB-A- 1 240 441
- JP-A- 2004 114 883
- US-A- 5 799 442
- US-A1- 2007 227 073

## Description

La présente invention concerne un lécheur de vitre pour porte de véhicule automobile.

L'invention concerne également une porte de véhicule automobile adaptée pour être équipée d'un tel lécheur de vitre ainsi qu'une porte équipée d'un lécheur de vitre selon l'invention.

Le document US5799442 décrit un lécheur de vitre (10) pour porte de véhicule automobile en matière élastique comportant une lèvre (4) destinée à s'appuyer élastiquement sur la vitre de la porte, cette lèvre (4) étant reliée à une embase (5) destinée à être plaquée contre la porte et comportant une première partie de retenue adaptée pour s'accrocher sur un bord supérieur de la peau extérieure (2) de la porte et une seconde partie de retenue (13) adaptée pour s'accrocher sur une partie (11) d'un raidisseur (6) de ladite porte, située sous ledit bord supérieur.

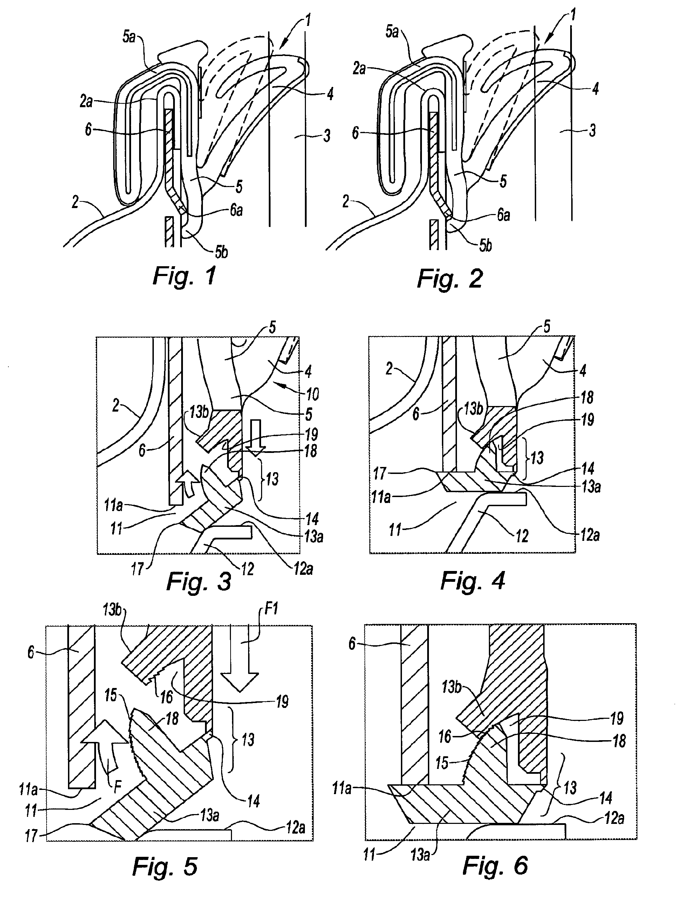

La figure 1 est une vue en coupe verticale montrant un lécheur de vitre 1 connu monté entre le bord supérieur 2a de la peau 2 d'une porte de véhicule automobile et la vitre mobile 3 portée par cette porte.

Le lécheur de vitre 1 est extrudé d'une seule pièce en matière thermo plastique (TPE) et armature métallique et comporte une lèvre 4 destinée à s'appuyer élastiquement sur la vitre.

Cette lèvre 4 est reliée à une embase 5 destinée à être plaquée contre le bord supérieur 2a de la peau 2 de la porte qui est serti sur un raidisseur en tôle 6.

L'embase 5 comporte une partie supérieure de retenue 5a adaptée pour s'accrocher sur le bord supérieur 2a de la peau 2 de la porte et une partie inférieure de retenue 5b adaptée pour s'accrocher sur une partie découpée et pliée 6a du raidisseur 6.

Dans le cas de la figure 1, l'embase 5 est relativement bien plaquée sur le bord supérieur 2a de la porte.

La figure 2 est une vue en coupe analogue à la figure 1, mais réalisée au niveau d'une extrémité avant ou arrière de la porte.

Cette vue montre que l'embase 5 est mal plaquée sur le bord supérieur 2a de la porte : un jeu important existe entre la partie supérieure de retenue 5a et le bord supérieur 2a ce qui engendre un écart entre le lécheur et la peau de carrosserie.

La figure 2 met en avant le jeu entre le lécheur extérieur et la peau.

L'objet de l'invention vise à annuler un tel jeu.

Ce jeu est nécessaire pour tenir compte des dispersions de fabrication existant entre le bord supérieur 2a de la porte et la position de la partie découpée 6a du raidisseur 6.

Cependant, le mauvais placage du lécheur de vitre 1 aux extrémités avant et arrière de la porte nuit à l'esthétique et à la qualité perçue par les utilisateurs, car il engendre des défauts d'affleurement avec les parties adjacentes de la carrosserie.

Le document US 6 612 074 décrit un lécheur de vitre dont l'embase présente sur sa surface intérieure des crans en contact avec la tôle de la porte.

Ces crans augmentent la friction de l'embase avec la tôle, mais ne permettent pas de résoudre le problème évoqué ci-dessus.

Le but de la présente invention est précisément de remédier à ce problème.

Ce but est atteint, selon l'invention, grâce à un lécheur de vitre pour porte de véhicule automobile en matière élastique comportant une lèvre destinée à s'appuyer élastiquement sur la vitre de la porte, cette lèvre étant reliée à une embase destinée à être plaquée contre la porte et comportant une première partie de retenue adaptée pour s'accrocher sur un bord supérieur de la peau extérieure de la porte et une seconde partie de retenue adaptée pour s'accrocher sur une partie d'un raidisseur de ladite porte, située sous ledit bord supérieur, caractérisé en ce que ladite seconde partie de retenue de l'embase comporte une partie mobile reliée à ladite embase par une charnière pour pouvoir pivoter vers une position dans laquelle cette partie mobile est adaptée pour venir s'accrocher sur ladite partie du raidisseur et se verrouiller à une partie fixe de l'embase.

De préférence, ladite partie mobile et ladite partie fixe de l'embase comportent des moyens de verrouillage complémentaires coopérant les uns avec les autres par encliquetage.

Dans un mode de réalisation préféré de l'invention, lesdits moyens de verrouillage complémentaires comprennent une série de crochets réalisés sur ladite partie mobile pouvant venir en prise avec une série de crochets complémentaires réalisés sur ladite partie fixe, après pivotement de la partie mobile vers la partie fixe autour de ladite charnière.

Ce mode de verrouillage permet de compenser le jeu de montage du lécheur de vitre sur la porte, ce qui permet de résoudre efficacement le problème évoqué plus haut.

Dans un mode de réalisation, lesdites séries de crochets sont réalisées sur deux surfaces cylindriques centrées sur l'axe de pivotement de ladite charnière.

Ainsi, un verrouillage peut être obtenu entre des crochets complémentaires avec un angle de pivotement de la partie mobile qui peut varier en fonction du jeu de montage à compenser.

De préférence, ladite partie mobile est pivotante entre une position dans laquelle elle est située sensiblement dans le prolongement de l'embase et une position dans laquelle elle est sensiblement perpendiculaire à l'embase et fait saillie par rapport à la surface de l'embase opposée à celle portant ladite lèvre.

Dans un mode de réalisation, la partie mobile comporte une protubérance pouvant, après pivotement de cette partie mobile, s'engager dans une cavité réalisée sur la partie fixe, lesdits crochets étant réalisés sur deux surfaces cylindriques complémentaires respectivement de ladite protubérance et de ladite cavité.

De préférence également, ladite charnière est venue de moulage avec le reste du lécheur de vitre.

Selon un autre aspect, l'invention concerne également une porte de véhicule automobile adaptée pour être équipée d'un lécheur de vitre selon l'invention, cette porte comportant une peau extérieure dont le bord supérieur est serti sur un raidisseur en tôle s'étendant parallèlement à la vitre mobile de la porte.

Suivant l'invention, cette porte est caractérisée en ce que ledit raidisseur comporte une découpe dont le bord inférieur porte une partie en tôle pliée faisant saillie vers la vitre, par rapport au bord supérieur de ladite découpe, de telle sorte que lors du montage du lécheur de vitre, dans l'espace compris entre le raidisseur et la vitre, la partie mobile de l'embase puisse venir en butée contre le bord supérieur de ladite partie en tôle pliée pour faire pivoter cette partie mobile autour de la charnière afin que celle-ci puisse s'engager dans ladite découpe et venir en prise avec le bord supérieur de ladite découpe et se verrouiller à la partie fixe de l'embase.

De préférence, le bord supérieur de ladite partie en tôle pliée comporte une partie pliée sensiblement perpendiculaire au raidisseur pour constituer une surface d'appui pour l'extrémité de la partie mobile de l'embase du lécheur de vitre, ladite extrémité de cette partie mobile comportant une surface inclinée adaptée pour provoquer le pivotement de cette partie mobile vers le raidisseur.

Selon un autre aspect, l'invention concerne également une porte de véhicule automobile équipée d'un lécheur de vitre selon l'invention.

D'autres particularités et avantages de l'invention apparaîtront encore tout au long de la description ci-après.

Aux dessins annexés, donnés à titre d'exemples, non limitatifs :
- la figure 3 est une vue en coupe verticale de la partie inférieure d'un lécheur de vitre selon l'invention, en cours de montage sur le bord supérieur de la peau et du raidisseur d'une porte ;
- la figure 4 est une vue analogue à la figure 3, montrant la partie inférieure du lécheur de vitre en position verrouillée par rapport au raidisseur ;
- la figure 5 est une vue de détail à échelle agrandie de la partie inférieure du lécheur de vitre dans la position représentée sur la figure 3 ;
- la figure 6 est une vue analogue à la figure 5, montrant la position verrouillée.

Les figures 3 et 4 représentent partiellement une porte de véhicule automobile adaptée pour recevoir un lécheur de vitre 10 selon l'invention dont on a représenté que la partie inférieure.

La porte représentée sur les figures 3 et 4 comporte comme dans le cas des figures 1 et 2, une peau extérieure 2 dont le bord supérieur (non visible) est serti sur un raidisseur en tôle 6 s'étendant parallèlement à la vitre mobile (non représentée) de la porte.

Selon un aspect de l'invention, le raidisseur 6 comporte une découpe 11 dont le bord inférieur porte une partie en tôle pliée 12 faisant saillie vers la vitre, par rapport au bord supérieur 11 a de la découpe 11.

Le lécheur de vitre 10 disposé entre le raidisseur 6 et la vitre (non représentée) comporte comme dans le cas des figures 1 et 2 une lèvre 4 destinée à s'appuyer élastiquement sur la vitre de la porte, cette lèvre 4 étant reliée à une embase 5 destinée à être plaquée contre le raidisseur 6.

Cette embase 5 comporte une première partie de retenue adaptée pour s'accrocher sur le bord supérieur de la peau extérieure 2 de la porte et une seconde partie de retenue 13 adaptée pour s'accrocher sous le bord supérieur 11 a de la découpe 11 réalisée dans le raidisseur 6.

Conformément à l'invention, la seconde partie de retenue 13 de l'embase 5 comporte une partie mobile 13a reliée à l'embase 5 par une charnière 14 pour pouvoir pivoter vers une position (voir figure 4) dans laquelle cette partie mobile 13a est adaptée pour venir s'accrocher sous le bord inférieur 11a de la découpe 11 et se verrouiller à une partie fixe 13b de l'embase 5.

A cet effet, la partie mobile 13a et la partie fixe 13b de l'embase 5 comportent des moyens de verrouillage complémentaires coopérant les uns avec les autres par encliquetage.

Dans l'exemple représenté, ces moyens de verrouillage complémentaires comprennent (voir figures 5 et 6) une série de crochets 15 réalisés sur la partie mobile 13a pouvant venir en prise, comme montré sur la figure 6, avec une série de crochets complémentaires 16 réalisés sur la partie fixe 13b, après pivotement de la partie mobile 13a vers la partie fixe 13b autour de la charnière 14.

Les deux séries de crochets 15, 16 sont réalisées sur deux surfaces cylindriques centrées sur l'axe de pivotement de la charnière 14.

Comme montré sur les figures 5 et 6, la partie mobile 13a est pivotante entre une position dans laquelle elle est située sensiblement dans le prolongement de l'embase 5 et une position dans laquelle elle est sensiblement perpendiculaire à l'embase 5 et fait saillie par rapport à la surface de l'embase 5c de l'embase 5 opposée à celle portant la lèvre 4.

Dans cette position, l'extrémité 17 de la partie mobile 13a est engagée sous le bord supérieur 11 a de la découpe 11 du raidisseur 6.

Par ailleurs, la partie mobile 13a comporte une protubérance 18 pouvant, après pivotement de cette partie mobile 13a, s'engager dans une cavité 19 réalisée sur la partie fixe 13b.

Les crochets 15 et 16 sont dans cet exemple réalisés sur deux surfaces cylindriques complémentaires respectivement de la protubérance 18 et de la cavité 19.

Chacun des crochets 15 ou 16 présente une forme qui permet de les engrener les uns dans les autres, avec une pente plus faible d'un côté que de l'autre pour faciliter leur engagement et obtenir un verrouillage anti-retour efficace.

Le pas compris entre les crochets 15, 16 peut varier entre 1 et 2 mm.

Ces crochets 15 et 16 ainsi que la charnière 14 peuvent être moulés d'une seule pièce avec la matière plastique constituant l'ensemble du lécheur de vitre 10.

La figure 5 montre que lors du montage du lécheur de vitre 10, la partie mobile 13a de l'embase 5 du lécheur de vitre 10 vient en butée contre le bord supérieur 12a de la partie en tôle pliée 12 du raidisseur 6, ce qui fait pivoter cette partie mobile 13a autour de la charnière 14 afin que celle-ci puisse s'engager (voir figure 6) dans la découpe 11 et venir en prise avec le bord supérieur 11 a de la découpe 11 et se verrouiller à la partie fixe 13b de l'embase 5 grâce à l'encliquetage des dents 15 dans les dents 16.

Le bord supérieur 12a de la partie en tôle pliée 12 comporte une partie pliée sensiblement perpendiculaire au raidisseur 6 pour constituer une surface d'appui pour l'extrémité 17 de la partie mobile 13a de l'embase 5 du lécheur de vitre.

L'extrémité 17 de cette partie mobile 13a comporte une surface inclinée adaptée pour provoquer le pivotement de cette partie mobile 13a vers le raidisseur 6, comme montré par la flèche F représentée sur la figure 5 sous l'effet d'une pression exercée sur le lécheur de vitre dans le sens de la flèche F1.

En fin de pivotement de la partie mobile 13a, c'est-à-dire lorsque celle-ci est en butée contre le bord supérieur 11a de la découpe 11 du raidisseur 6, le jeu de montage de l'embase 5 du lécheur de vitre selon l'invention, dans le sens vertical est entièrement compensé, y compris aux extrémités avant et arrière de la porte.

Les tolérances de fabrication, c'est-à-dire les écarts de distance pouvant exister entre le bord supérieur de la peau 2 de la porte et la position de la découpe 11 du raidisseur, sont compensés, étant donné que dans tous les cas, la partie mobile 13a de l'embase 5 est verrouillée en butée contre le bord supérieur 11 a de la découpe 11.

On obtient ainsi un montage du lécheur de vitre 10 qui remplit dans tous les cas les exigences de qualité et d'esthétique.

## Revendications

1. Lécheur de vitre (10) pour porte de véhicule automobile en matière élastique comportant une lèvre (4) destinée à s'appuyer élastiquement sur la vitre de la porte, cette lèvre (4) étant reliée à une embase (5) destinée à être plaquée contre la porte et comportant une première partie de retenue adaptée pour s'accrocher sur un bord supérieur de la peau extérieure (2) de la porte et une seconde partie de retenue (13) adaptée pour s'accrocher sur une partie (11) d'un raidisseur (6) de ladite porte, située sous ledit bord supérieur, **caractérisé en ce que** ladite seconde partie de retenue (13) de l'embase (5) comporte une partie mobile (13a) reliée à ladite embase (5) par une charnière (14) pour pouvoir pivoter vers une position dans laquelle cette partie mobile (13a) est adaptée pour venir s'accrocher sur ladite partie (11) du raidisseur (6) et se verrouiller à une partie fixe (13b) de l'embase (5).

2. Lécheur de vitre selon la revendication 1, **caractérisé en ce que** ladite partie mobile (13a) et ladite partie fixe (13b) de l'embase comportent des moyens de verrouillage complémentaires coopérant les uns avec les autres par encliquetage.

3. Lécheur de vitre selon la revendication 2, **caractérisé en ce que** lesdits moyens de verrouillage complémentaires comprennent une série de crochets (15) réalisés sur ladite partie mobile (13a) pouvant venir en prise avec une série de crochets complémentaires (16) réalisés sur ladite partie fixe (13b), après pivotement de la partie mobile (13a) vers la partie fixe (13b) autour de ladite charnière (14).

4. Lécheur de vitre selon la revendication 3, **caractérisé en ce que** lesdites séries de crochets (15, 16) sont réalisées sur deux surfaces cylindriques centrées sur l'axe de pivotement de ladite charnière (14).

5. Lécheur de vitre selon l'une des revendications 1 à 4, **caractérisé en ce que** ladite partie mobile (13a) est pivotante entre une position dans laquelle elle est située sensiblement dans le prolongement de l'embase (5) et une position dans laquelle elle est sensiblement perpendiculaire à l'embase (5) et fait saillie par rapport à la surface de l'embase (5) opposée à celle portant ladite lèvre (4).

6. Lécheur de vitre selon la revendication 4, **caractérisé en ce que** la partie mobile (13a) comporte une protubérance (18) pouvant, après pivotement de cette partie mobile (13a), s'engager dans une cavité (19) réalisée sur la partie fixe (13b), lesdits crochets (15, 16) étant réalisés sur deux surfaces cylindriques complémentaires respectivement de ladite protubérance (18) et de ladite cavité (19).

7. Lécheur de vitre selon l'une des revendications 1 à 6, **caractérisé en ce que** ladite charnière (14) est venue de moulage avec le reste du lécheur de vitre (10).

8. Porte de véhicule automobile équipée d'un lécheur de vitre (10) selon l'une des revendications 1 à 7, comportant une peau extérieure (2) dont le bord supérieur est serti sur un raidisseur en tôle (6) s'étendant parallèlement à la vitre mobile de la porte, **caractérisée en ce que** ledit raidisseur (6) comporte une découpe (11) dont le bord inférieur porte une partie en tôle pliée (12) faisant saillie vers la vitre, par rapport au bord supérieur (11a) de ladite découpe (11), de telle sorte que lors du montage du lécheur de vitre (10), dans l'espace compris entre le raidisseur (6) et la vitre, la partie mobile (13a) de l'embase (5) puisse venir en butée contre le bord supérieur (12a) de ladite partie en tôle pliée (12) pour faire pivoter cette partie mobile (13a) autour de la charnière (14) afin que celle-ci puisse s'engager dans ladite découpe (11) et venir en prise avec le bord supérieur (11 a) de ladite découpe (11) et se verrouiller à la partie fixe (13b) de l'embase (5).

9. Porte selon la revendication 8, **caractérisée en ce que** le bord supérieur (12a) de ladite partie en tôle pliée (12) comporte une partie pliée sensiblement perpendiculaire au raidisseur (6) pour constituer une surface d'appui pour l'extrémité (17) de la partie mobile (13a) de l'embase (5) du lécheur de vitre (10), ladite extrémité (17) de cette partie mobile (13a) comportant une surface inclinée adaptée pour provoquer le pivotement de cette partie mobile (13a) vers le raidisseur (6).

10. Porte de véhicule automobile équipée d'un lécheur de vitre selon l'une des revendications 1 à 7.

## Patentansprüche

1. Fensterdichtung (10) für Kraftfahrzeugtür aus elastischem Material, die eine Lippe (4) aufweist, die dazu bestimmt ist, sich elastisch auf der Fensterscheibe der Tür zu stützen, wobei diese Lippe (4) mit einer Fußfläche (5) verbunden ist, die dazu bestimmt ist, gegen die Tür gedrückt zu werden, und einen ersten Halteteil aufweist, der angepasst ist, um sich auf einen oberen Rand des Außenblechs (2) der Tür zu hängen, und einen zweiten Halteteil (13), der angepasst ist, um sich auf einen Teil (11) eines Versteifers (6) der Tür zu hängen, der unter dem oberen Rand liegt, **dadurch gekennzeichnet, dass** der zweite Halteteil (13) der Fußfläche (5) einen beweglichen Teil (13a) aufweist, der mit der Fußfläche (5) durch ein Scharnier (14) verbunden ist, um zu einer Position schwenken zu können, in der der bewegliche Teil (13a) angepasst ist, um sich auf den Teil (11) der Versteifung (6) zu hängen und sich an einem stationären Teil (13b) der Fußfläche (5) zu verriegeln.

2. Fensterdichtung nach Anspruch 1, **dadurch gekennzeichnet, dass** der bewegliche Teil (13a) und der stationäre Teil (13b) der Fußfläche komplementäre Verriegelungsmittel aufweisen, die miteinander durch Einrasten zusammenwirken.

3. Fensterdichtung nach Anspruch 2, **dadurch gekennzeichnet, dass** die komplementären Verriegelungsmittel eine Reihe von Haken (15), die auf dem beweglichen Teil (13a) angeordnet sind, aufweisen, die mit einer Reihe ergänzender Haken (16), die auf dem stationären Teil (13b) hergestellt sind, nach dem Schwenken des beweglichen Teils (13a) zu dem stationären Teil (13b) um das Scharnier (14) zum Eingriff kommen können.

4. Fensterdichtung nach Anspruch 3, **dadurch gekennzeichnet, dass** die Reihen von Haken (15, 16) auf zwei zylindrischen Oberflächen, die auf der Schwenkachse des Scharniers (14) zentriert sind, hergestellt sind.

5. Fensterdichtung nach einem der Ansprüche 1 bis 4, **dadurch gekennzeichnet, dass** der bewegliche Teil (13a) zwischen einer Position, in der er sich im Wesentlichen in der Verlängerung der Fußfläche (5) befindet, und einer Position, in der er im Wesentlichen senkrecht zu der Fußfläche (5) liegt und in Bezug zu der Oberfläche der Fußfläche (5) gegenüber der, die die Lippe (4) trägt, vorsteht, schwenkend ist.

6. Fensterdichtung nach Anspruch 4, **dadurch gekennzeichnet, dass** der bewegliche Teil (13a) einen Vorsprung (18) aufweist, der sich nach Schwenken dieses beweglichen Teils (13a) in einen Hohlraum (19), der auf dem stationären Teil (13b) hergestellt ist, einfügen kann, wobei die Haken (15, 16) auf zwei zylindrischen Oberflächen, die jeweils mit dem Vorsprung (18) und dem Hohlraum (19) komplementär sind, hergestellt sind.

7. Fensterdichtung nach einem der Ansprüche 1 bis 6, **dadurch gekennzeichnet, dass** das Scharnier (14) durch Formen aus einem Teil mit dem Rest der Fensterdichtung (10) besteht.

8. Kraftfahrzeugtür, die mit einer Fensterdichtung (10) nach einem der Ansprüche 1 bis 7 ausgestattet ist, die ein Außenblech (2) aufweist, dessen oberer Rand auf einen Versteifer (6) aus Blech gecrimpt ist, der sich parallel zu der beweglichen Fensterscheibe der Tür erstreckt, **dadurch gekennzeichnet, dass** der Versteifer (6) einen Ausschnitt (11) aufweist, dessen unterer Rand einen Teil aus Faltblech (12) trägt, der zu der Fensterscheibe in Bezug auf den oberen Rand (11a) des Ausschnitts (11) derart vorsteht, dass bei der Montage der Fensterdichtung (10) in dem Raum, der zwischen dem Versteifer (6) und der Fensterscheibe liegt, der bewegliche Teil (13a) der Fußfläche (5) zum Anschlagen gegen den oberen Rand (12a) des Teils aus Faltblech (12) kommen kann, um diesen beweglichen Teil (13a) um das Scharnier (14) schwenken zu lassen, damit dieser in den Ausschnitt (11) eingreifen und zum Eingriff mit dem oberen Rand (11a) des Ausschnitts (11) kommen und sich an dem stationären Teil (13b) der Fußfläche (5) verriegeln kann.

9. Tür nach Anspruch 8, **dadurch gekennzeichnet, dass** der obere Rand (12a) des Teils aus Faltblech (12) einen Teil aufweist, der im Wesentlichen senkrecht zu dem Versteifer (6) gefaltet wird, um eine Auflageoberfläche für das Ende (17) des beweglichen Teils (13a) der Fußfläche (5) der Fensterdichtung (10) zu bilden, wobei das Ende (17) dieses beweglichen Teils (13a) eine geneigte Oberfläche aufweist, die angepasst ist, um das Schwenken dieses beweglichen Teils (13a) zu dem Versteifer (6) zu bewirken.

10. Kraftfahrzeugtür, die mit einer Fensterdichtung nach einem der Ansprüche 1 bis 7 ausgestattet ist.

## Claims

1. A window sealing strip (10) for a motor vehicle door, made of resilient material, comprising a lip (4) intended to resiliently bear against the window of the door, this lip (4) being connected to a base (5) intended to be placed flat against the door and comprising a first retaining portion capable of being attached onto an upper edge of the outer skin (2) of the door, and a second retaining portion (13), capable of being attached onto a portion (11) of a stiffener (6) of the said door, situated beneath the said upper edge, **characterized in that** the said second retaining portion (13) of the base (5) comprises a movable portion (13a) connected to the said base (5) by a hinge (14) so as to be able to pivot towards a position in which this movable portion (13a) is capable of being attached onto the said portion (11) of the stiffener (6) and of being locked onto a stationary portion (13b) of the base (5).

2. The window sealing strip according to Claim 1, **characterized in that** the said movable portion (13a) and the said stationary portion (13b) of the base comprise complementary locking means cooperating with one another by ratcheting.

3. The window sealing strip according to Claim 2, **characterized in that** the said complementary locking means include a series of hooks (15) formed on the said movable portion (13a), able to come into engagement with a series of complementary hooks (16) formed on the said stationary portion (13b) after pivoting of the movable portion (13a) towards the stationary portion (13b) about the said hinge (14).

4. The window sealing strip according to Claim 3, **characterized in that** the said series of hooks (15, 16) are formed on two cylindrical surfaces centred on the pivoting axis of the said hinge (14).

5. The window sealing strip according to one of Claims 1 to 4, **characterized in that** the said movable portion (13a) is pivoted between a position in which it is situated substantially in the extension of the base (5) and a position in which it is substantially perpendicular to the base (5) and projects with respect to the surface of the base (5) opposite that carrying the said lip (4).

6. The window sealing strip according to Claim 4, **characterized in that** the movable portion (13a) comprises a protuberance (18) able, after pivoting of this movable portion (13a), to engage in a cavity (19) formed on the stationary portion (13b), the said hooks (15, 16) being formed on two complementary cylindrical surfaces respectively of the said protuberance (18) and of the said cavity (19).

7. The window sealing strip according to one of Claims 1 to 6, **characterized in that** the said hinge (14) is moulded integrally with the remainder of the window sealing strip (10).

8. A motor vehicle door equipped with a window sealing strip (10) according to one of Claims 1 to 7, comprising an outer skin (2), the upper edge of which is crimped on a stiffener (6) made of sheet metal, extending parallel to the movable window of the door, **characterized in that** the said stiffener (6) comprises a cut-out (11), the lower edge of which carries a portion made of canted sheet metal (12) projecting towards the window, with respect to the upper edge (lla) of the said cut-out (11), such that during the mounting of the window sealing strip (10), in the space comprised between the stiffener (6) and the window, the movable portion (13a) of the base (5) can come into abutment against the upper edge (12a) of the said portion made of canted sheet metal (12) to pivot this movable portion (13a) about the hinge (14) so that it can engage in the said cut-out (11) and come into engagement with the upper edge (11a) of the said cut-out (11) and be locked to the stationary portion (13b) of the base (5).

9. The door according to Claim 8, **characterized in that** the upper edge (12a) of the said portion made of canted sheet metal (12) comprises a canted portion substantially perpendicular to the stiffener (6) to constitute a support surface for the end (17) of the movable portion (13a) of the base (5) of the window sealing strip (10), the said end (17) of this movable portion (13a) comprising an inclined surface capable of causing the pivoting of this movable portion (13a) towards the stiffener (6).

10. A motor vehicle door equipped with a window sealing strip according to one of Claims 1 to 7.
